# EUROPEAN PATENT APPLICATION

(11) **EP 1 281 570 A1**
(43) Date of publication of application: **05.02.2003**
(21) Application number: 02016882.9
(22) Date of filing: 30.07.2002
(51) Int. Cl.: B60P 7/12

(54) **Device for securing barrel or cask shaped cargo**

(30) Priority: 01.08.2001 NO 20013766
(71) Applicant: Stenli, Terje Thon, 2450 Rena (NO)
(72) Inventor: Stenli, Terje Thon, 2450 Rena (NO)
(74) Representative: Rupp, Christian, Dipl.Phys.

(57) **Abstract**

A device for securing barrel or cask shaped cargo (1) against displacement both in the direction of rolling and transversal thereto, comprising a yoke-like component (4) to be placed across the space between and/or locked to the end faces of barrels (1) placed next to each other in pairs, preferably at respective ends of the barrels, in order to allow a cargo strap (3) to be brought up along the plane of the end faces of the barrels, or between the barrels, over the yoke or yokes (4) and down the other side, for, in turn, to be fixed to the base (2) at both ends. The yoke or each yoke (4) is formed by a block (41) with curved surfaces (42) suitable for engaging the curved side faces of the barrels (1), and at least one locking board (43) for engaging the top of the curved side faces of the barrels and/or the end faces of the barrels, the bock (41) being provided with undercut grooves (44) for retaining the locking boards (43).

## Description

The present invention relates to a device for securing barrel or cask shaped cargo.

Barrel or cask shaped cargo, also called "rolling cargo", has a tendency to roll sideways, in particular, but not exclusively, when loaded in several layers on top of each other. Such a tendency entails a great risk of damage to both the cargo and the surroundings if such rolling is not prevented. Both national and international guidelines have been established for how to secure the cargo, inter alia by use of cargo straps, when transporting such cargo by road vehicles, trains and seagoing vessels.

From e.g. US 458515 is a device of the introductorily type known, which consists of a yoke-like component to be placed across the space between barrels in pairs located next to each other, and preferably at each end of the barrels, in order to allow for "stacking" of further layers of such barrels on a base formed by said yokes. From US 3 229 825, for example, it is known to lock such yoke-like components by means of cargo straps that are brought around or between the barrels and fixed to the base.

The object of the invention is to provide a securing device, by which the cargo straps can be placed over the rolling cargo, which in the following will briefly be termed "barrels", and transversal to the rolling direction thereof. Thus the cargo is secured against being displaced both in the rolling direction and transversal thereto.

The invention thus relates to a device for securing barrel or cask shaped cargo against displacement both in the rolling direction and transversal thereto, comprising a yoke-like component to be placed across the space between and/or in engagement with the end faces of barrels in pairs located next to each other, preferably at respective ends of the barrels, to allow a cargo strap to be brought up along the plane of the end faces of the barrels, or between the barrels, over the yoke or yokes and down the opposite side, for, in turn, to be fixed to the base at both ends.

The yoke-like component is formed by a block with curved surfaces for engaging the curved side faces (cylinder faces) of the barrels, and at least one locking board for engaging the top of the curved side faces of the barrels and/or the end faces of the barrels, the special feature of the device is that the locking board or locking boards is/are releasably connected to the block, whereby undercut grooves are provided in the block for retaining the locking boards.

Further characteristic features of the invention will appear from the claims and from the following description of an embodiment of the invention.

The invention will be described in greater detail with reference to the appended drawings, in which:

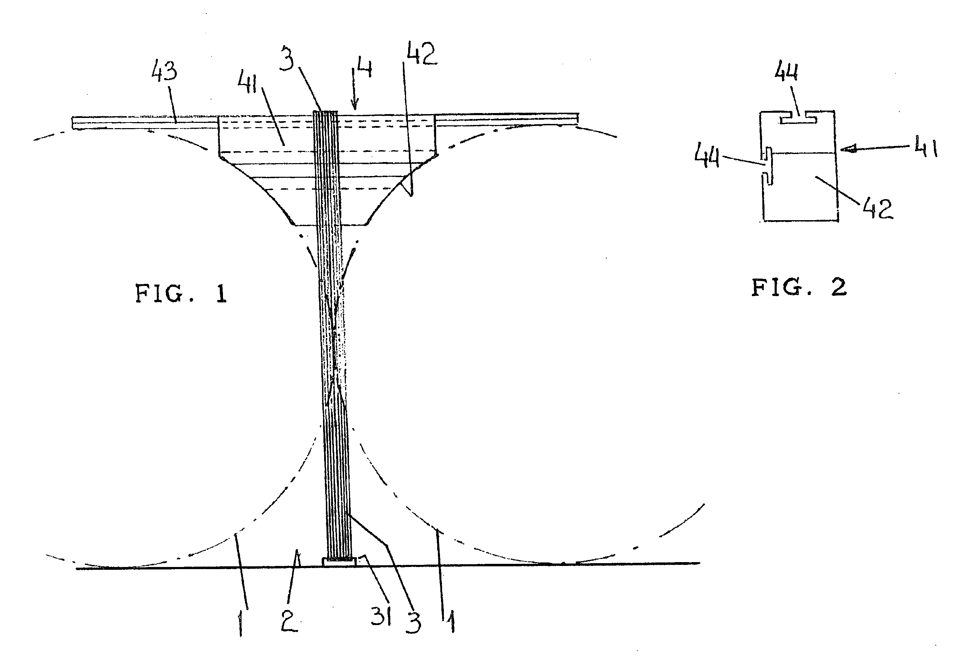

- Fig. 1: shows an end view of two barrels, with a yoke in accordance with the invention being positioned across the top of the barrels; and
- Fig. 2: is, relative to figure 1, a side view of the yoke or a central portion of the yoke.

In the drawings, segmented lines indicate two barrels 1 positioned next to each other on a base, which can be a truck body or a boat deck 2, or actually the top of a similar layer of barrels, which in turn is located on a truck body or a boat deck 2. The barrels 1 are secured in pairs against being displaced both along and transversal to the axial direction of the barrels, by means of cargo straps 3 brought from fixing points 31 on the base 2 at one end plane of the barrels 1, over the yoke 4 arranged across the space between the barrels 1 located next to each other in pairs and at each end of the barrels, and down to the fixing points 31 on the base 2 at the opposite end plane of the barrels.

Each yoke 4 is formed by a block 41 with curved surfaces 42 suitable for engaging the curved side faces of the barrels 1, and a locking board 43 for engagement with the top of the curved side faces of the barrels 1. Undercut grooves 44 are provided in the top surface of the block 41 for co-operation with the laterally projecting fin-like portions of the locking boards 43, whereby the locking board is retained in the yoke block 41. Similar undercut grooves 44 are also provided on at least one side face on the yoke block. Thus the yoke block 41 may secure the locking board 43 for co-operation with the top of the curvature of the two adjoining barrels 1 and/or with the end faces of the two adjoining barrels.

The locking boards 43 are conveniently shaped with both transversal and longitudinal guiding grooves (not shown) for guiding the cargo straps 3 over the barrels 1 in the axial direction thereof, and also for guiding similar cargo straps (not shown) placed over the barrels 1 transversal to their axial direction and fixed to the base 2.

## Claims

1. A device for securing barrel or cask shaped cargo (1) against displacement both in the rolling direction and transversal thereto, comprising a yoke-like component (4) to be placed across the space between and/or in engagement with the end faces of barrels (1) placed next to each other in pairs, preferably at respective ends of the barrels, in order to allow a cargo strap (3) to be brought up along the plane of the end faces of the barrels, or between the barrels, over the yoke or yokes (4) and down the opposite side, for, in turn, to be fixed to the base (2) at both ends, the yoke-like component (4) being formed by a block (41) with curved surfaces (42) suitable for engaging the curved side faces of the barrels (1), and at least one locking board (43) for engaging the top of the curved side faces of the barrels and/or the end faces of the barrels, **characterised** i n that the locking board or locking boards (43) are releasably connected to the block (41), with undercut grooves (44) being provided in the block for retaining the locking boards (43).

2. The device according to claim 1, **characterised in that** the block (41) is provided with undercut grooves (44) in at least one of the side faces of the block, in addition to the undercut groove (44) **in that** face of the block (41) facing away from said curved surfaces (42).
